(19) Europäisches Patentamt
European Patent Office
Office européen des brevets

(11) **EP 1 987 421 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(21) Anmeldenummer: **06830128.2**

(22) Anmeldetag: **27.11.2006**

(51) Int Cl.:
***G06F 7/72*** *(2006.01)*

(86) Internationale Anmeldenummer:
**PCT/EP2006/068919**

(87) Internationale Veröffentlichungsnummer:
**WO 2007/087911 (09.08.2007 Gazette 2007/32)**

(54) **VERFAHREN, VORRICHTUNG UND SYSTEM ZUM VERIFIZIEREN VON AUF EINER ELLIPTISCHEN KURVE ERMITTELTEN PUNKTEN**

METHOD, DEVICE, AND SYSTEM FOR VERIFYING POINTS DETERMINED ON AN ELLIPTIC CURVE

PROCÉDÉ, DISPOSITIF ET SYSTÈME DE VÉRIFICATION DE POINTS DÉTERMINÉS SUR UNE COURBE ELLIPTIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.01.2006 DE 102006002891**

(43) Veröffentlichungstag der Anmeldung:
**05.11.2008 Patentblatt 2008/45**

(73) Patentinhaber: **SIEMENS AKTIENGESELLSCHAFT**
**80333 München (DE)**

(72) Erfinder:
• **BRAUN, Michael**
**81825 München (DE)**
• **KARGL, Anton**
**80639 München (DE)**
• **MEYER, Bernd**
**81739 München (DE)**

(56) Entgegenhaltungen:
**EP-A- 1 443 393     WO-A-00/25204**

• **FISCHER W ET AL: "Parallel scalar multiplication on general elliptic curves over Fp hedged against Non-Differential Side-Channel" INTERNET CITATION, [Online] 9. Januar 2002 (2002-01-09), XP002241975 Gefunden im Internet: URL:http://eprint.iacr.org/2002/007/> [gefunden am 2003-05-15]**
• **TRICHINA E ET AL: "IMPLEMENTATION OF ELLIPTIC CURVE CRYPTOGRAPHY WITH BUILT-IN COUNTER MEASURES AGAINST SIDE CHANNEL ATTACKS" CRYPTOGRAPHIC HARDWARE AND EMBEDDED SYSTEMS. INTERNATIONAL WORKSHOP, 13. August 2002 (2002-08-13), Seiten 98-113, XP001160524**

**Beschreibung**

Die Erfindung betrifft ein Verfahren, eine Vorrichtung und ein System zum Verifizieren von auf einer elliptischen Kurve ermittelten Punkten.

Kryptographische Verfahren auf Basis elliptischer Kurven sind sehr effizient, was insbesondere daran liegt, dass bei diesen Verfahren im Gegensatz zu bisher bekannten kryptographischen Verfahren keine Angriffsmethoden mit subexponentieller Laufzeit bekannt sind. Anders ausgedrückt bedeutet dies, dass der Sicherheitsgewinn pro Bit der verwendeten Sicherheitsparameter bei Verfahren auf Basis elliptischer Kurven höber ist und somit für praktische Anwendung deutlich kürzere Schlüssellängen verwendet werden können.

Somit sind kryptographische Verfahren auf Basis elliptischer Kurven performanter und benötigen eine geringere Bandbreite zur Übertragung der Systemparameter als andere kryptographische Verfahren bei vergleichbarem Grad an erreichbarer Sicherheit.

Als Beispiel sei hier das bekannte Diffie-Hellman-Verfahren zur Vereinbarung eines gemeinsamen Schlüssels zwischen zwei Kommunikationsteilnehmern basierend auf elliptischen Kurven umrissen. Hierbei kennt der erste Kommunikationsteilnehmer A einen Sicherheitsparameter $r_a$ und der zweite Kommunikationsteilnehmer B einen Sicherheitsparameter $r_b$. Nachdem sich die beiden Kommunikationsteilnehmer auf eine elliptische Kurve und auf einen gemeinsamen Punkt P auf dieser elliptischen Kurve geeinigt haben, ermittelt der Kommunikationsteilnehmer A einen Wert

$$Q_a = r_a * P$$

und der Kommunikationsteilnehmer B einen Wert

$$Q_b = r_b * P.$$

Im Anschluss hieran wird vom Kommunikationsteilnehmer A der Wert $Q_a$ an den Kommunikationsteilnehmer B übertragen und der Wert $Q_b$ vom Kommunikationsteilnehmer B an den Kommunikationsteilnehmer A übertragen. In einer weiteren Skalarmultiplikation ermittelt nun der Kommunikationsteilnehmer A den gemeinsamen Schlüssel

$$K = r_a * Q_b = r_a * r_b * P$$

und der Kommunikationsteilnehmer B denselben gemeinsamen Schlüssel

$$K = r_b * Q_a = r_b * r_a * P.$$

Diese Skalarmultiplikationen bilden somit einen wesentlichen Baustein in kryptographischen Verfahren auf Basis elliptischer Kurven. Besonders vorteilhaft ist die Anwendung von elliptischen Kurven, da die Invertierungsoperation

$$r_{a,b} = Q_{a,b}/P$$

nur mit erheblichem Rechenaufwand berechnet werden kann. Nach heutigem Kenntnisstand ist die Skalarmultiplikation in polynomieller Zeit berechenbar aber nur in exponentieller Zeit invertierbar.

Die bekannten kryptographischen Verfahren auf Basis elliptischer Kurven sind jedoch hinsichtlich sog. Seitenkanalangriffe verletzbar.

Seitenkanalangriffe sind eine Klasse von Methoden zur Kryptoanalyse. Im Gegensatz zu klassischen Angriffen auf kryptographische Anwendungen versucht ein Angreifer dabei nicht, den zugrunde liegenden abstrakten mathematischen Algorithmus zu brechen, sondern attaktiert eine spezielle Implementierung eines kryptographischen Verfahrens. Dazu verwendet der Angreifer leicht zugängliche physikalische Messgrößen der konkreten Implementierung, wie z. B.

die Laufzeit der Berechnung, den Stromverbrauch und die elektromagnetische Abstrahlung des Prozessors während der Berechnung oder das Verhalten der Implementierung bei induzierten Fehlern. Die physikalischen Messwerte einer einzelnen Berechnung können direkt analysiert werden, beispielsweise in einer einfachen Stromanalyse, SPA, oder ein Angreifer zeichnet die Messwerte mehrerer Berechnungen beispielsweise mit einem Speicheroszilloskop auf und wertet die Messwerte anschließend statistisch aus, beispielsweise in einer differentiellen Stromanalyse, DPA. Seitenkanalangriffe sind häufig wesentlich effizienter als kryptoanalytische Techniken und können selbst Verfahren brechen, die aus Sicht der Algorithmen als sicher gesehen werden, wenn die Implementierung dieser Algorithmen nicht gegen Seitenkanalangriffe abgesichert ist. Somit ist erkannt worden, dass die konkrete Implementierung von kryptographischen Verfahren, welche auf elliptischen Kurven basieren, für den schlussendlich resultierenden Grad an erreichbarer Sicherheit der jeweiligen Applikationen von erheblicher Bedeutung ist. Insbesondere für Smart Cards und Embedded Anwendungen sind derartige Gegenmaßnahmen gegen Seitenkanalangriffe unbedingt erforderlich.

Ein Beispiel dieser Seitenkanalangriffe ist die so genannte Fehleranalyse. Hierbei versucht ein Angreifer, durch gezielte Manipulation der Betriebsparameter einer Implementierung eines kryptographischen Verfahrens transiente oder permanente Fehler während der kryptographischen Berechnung hervorzurufen. Der Angriff ist möglich, da die korrekte Funktion einer Komponente, wie beispielsweise einer Smart Card oder eines Embedded Systems, vom Hersteller nur innerhalb fest vorgegebener Umweltbedingungen garantiert werden kann. Es gibt folglich eine große Bandbreite an technischen Möglichkeiten zur Erzeugung solcher Fehler, als da wären Manipulation der Takterzeugung, Schwankungen der Versorgungsspannung, Über- oder Untertemperatur, Lichtblitze oder gezielte Störung mittels eines Lasers, partielle Zerstörung der elektrischen Schaltkreise, energetische Strahlung, usw. Die Unterschiede zwischen Ausgaben der Schaltung bei korrekter und fehlerhafter Arbeitsweise können einem Angreifer in Abhängigkeit vom verwendeten Fehlermodell der Implementierung Informationen über geheime Daten, wie beispielsweise über geheime Schlüssel, geben. Bei manchen Kryptoverfahren genügt ein einziges falsches Rechenergebnis, um zur sofortigen Preisgabe der geheimen Schlüssel zu führen. Daher müssen sicherheitsrelevante Implementierungen geeignete Gegenmaßnahmen zum Schutz gegen Fehleranalyse haben.

Bisher bekannte Gegenmaßnahmen reichen von Sensoren, die die Umweltbedingungen überwachen und bei unzulässigen Betriebsbedingungen die Ausführung der kryptographischen Berechnungen verhindern bis hin zu algorithmischen Schutzmaßnahmen. Bei den algorithmischen Schutzmaßnahmen kann beispielsweise die kryptographische Berechnung zweimal ausgeführt und die beiden Ergebnisse miteinander verglichen werden. Dies hat jedoch den Nachteil eines verdoppelten Rechenaufwandes und damit einhergehend einer zumindest verdoppelten Rechenzeit. In einer weiteren bekannten Gegenmaßnahme zum Schutz gegen Fehleranalysen werden Invarianten in Zwischenergebnissen des kryptographischen Verfahrens eingeführt, welche während der kompletten Berechnung erhalten bleiben müssen. Bevor das Ergebnis der Berechnung ausgegeben wird, überprüft das Gerät, ob die Invariante am Ende der Berechnung noch gültig ist. Falls ein Fehler auftrat, ist die Invariante mit großer Wahrscheinlichkeit nicht mehr erfüllt. Dieses Verfahren hat jedoch wiederum den Nachteil, dass mehrere zusätzliche Rechenschritte vorgenommen werden müssen und somit hohe Anforderungen an die erforderliche Rechenkapazität und den verfügbaren Speicherplatz gestellt werden. Eine weitere gegenmaßnahme ist bekannt aus der Europaïschen Patentanmeldung EP 1 443 393 A2.

In speziellen Umgebungen, auf denen kryptographische Verfahren implementiert werden sollen, wie beispielsweise Smart Cards oder RFID-Chips, sind jedoch spezielle Anforderungen hinsichtlich der verfügbaren Rechenkapazität und des vorhandenen Speicherplatzes zu berücksichtigen. In diesen Umgebungen haben die oben beschriebenen Verfahren zur Abwehr von Seitenkanalangriffen, insbesondere von Fehleranalysen, jedoch den Nachteil, dass sie in solchen Systemen aufgrund ihrer hohen Anforderungen an die Rechenkapazität und den verfügbaren Speicherplatz nicht eingesetzt werden können.

Somit liegt der Erfindung das Problem zugrunde, ein Verfahren, eine Vorrichtung sowie ein System zur Abwehr von Seitenkanalangriffen, insbesondere von auf Fehleranalysen basierenden Seitenkanalangriffen, anzubieten, bei dem gegenüber den bisher bekannten Lösungen eine weitere Reduktion an Rechenzeitbedarf sowie eine Reduktion an benötigtem Speicherplatz erreicht wird.

Erfindungsgemäß wird diese Aufgabe durch ein Verfahren und eine Vorrichtung mit den Merkmalen der Ansprüche 1 und 8 gelöst. Vorteilhafte Weiterbildungen der vorliegenden Erfindung sind in den abhängigen Ansprüchen angegeben.

Erfindungsgemäß wird in einem kryptographischen Verfahren zum Verifizieren von auf einer elliptischen Kurve ermittelten Punkten eine elliptische Kurve bereitgestellt. Zumindest eine Koordinate mindestens eines ersten Punktes, der auf der elliptischen Kurve liegt, wird ausgewählt oder ermittelt. Dieser erste Punkt wird gemäß einem Montgomery-Leiter-Algorithmus mit einem Skalar multipliziert, wobei bei dem Algorithmus nur eine Koordinate des ersten Punktes verwendet wird. Als Ergebnis der Skalarmultiplikation werden weitere Punkte erhalten, welche zumindest eine Koordinate des jeweiligen Ergebnisses des mit dem Skalar multiplizierten ersten Punktes und des mit einem um einen Wert erhöhten Skalar multiplizierten ersten Punktes umfassen. Die ermittelten Punkte umfassen somit den ersten Punkt und die weiteren Punkte. Anschließend wird überprüft, ob die ermittelten Punkte auf einer Geraden liegen können. Die ermittelten Punkte werden als verifiziert erkannt, sofern sie auf einer Geraden liegen können. Das Verfahren ist in vorteilhafter Weise geeignet, in Umgebungen mit begrenzten Rechnerressourcen eingesetzt zu werden, da eine Ermittlung, ob die ermittelten Punkte auf einer Geraden liegen, mit geringem Rechenaufwand erfolgt.

Vorzugsweise wird ein Polynom zur Überprüfung der ermittelten Punkte ausgewertet, wobei die Auswertung des Polynoms genau dann einen bestimmten Wert ergibt, wenn die zu überprüfenden Punkte auf einer Geraden liegen. Dies hat die vorteilhafte Wirkung, dass das Verfahren zur Verifizierung mit einer weiter reduzierten Anzahl von Multiplikationen und Additionen auskommt und somit der erforderliche Rechenaufwand weiter verringert wird.

Nach einer weiteren vorteilhaften Ausgestaltung der vorliegenden Erfindung wird nach einer vorgebbaren Anzahl von vollständig abgearbeiteten Bits des Skalars eine Verifizierung der ermittelten Punkte vorgenommen. Dies bringt den Vorteil mit sich, dass eine Verifizierung nach jedem Schritt des Algorithmus vorgenommen werden kann und somit die Sicherheit weiter erhöht wird oder eine Verifikation beispielsweise erst nach Ablauf des Algorithmus vorgenommen werden kann, um somit die Geschwindigkeit der Skalarmultiplikation zu erhöhen.

Gemäß der erfindungsgemäßen Vorrichtung zum Verifizieren von auf einer elliptischen Kurve ermittelten Punkten weist die Vorrichtung Mittel auf, die derart eingerichtet sind, dass folgende Verfahrensschritte durchführbar sind: Es wird eine elliptische Kurve bereitgestellt und zumindest eine Koordinate mindestens eines ersten Punktes auf der elliptischen Kurve ausgewählt oder ermittelt. Der erste Punkt wird gemäß einem Montgomery-Leiter-Algorithmus mit einem Skalar multipliziert, wobei bei dem Algorithmus nur eine Koordinate des ersten Punktes verwendet wird.

Als Ergebnis der Skalarmultiplikation werden weitere Punkte erhalten, welche zumindest eine Koordinate des jeweiligen Ergebnisses des mit dem Skalar multiplizierten ersten Punktes und des mit einem um einen Wert erhöhten Skalar multiplizierten ersten Punktes umfassen. Somit umfassen die ermittelten Punkte zumindest den ersten Punkt und die weiteren Punkte. Anschließend wird überprüft, ob die ermittelten Punkte auf einer Geraden liegen können, wobei die ermittelten Punkte dann als verifiziert erkannt werden, wenn sie auf einer Geraden liegen können.

Gemäß dem erfindungsgemäßen System zum Verifizieren von auf einer elliptischen Kurve ermittelten Punkten mit einem ersten Rechner und einem zweiten Rechner sind der erste Rechner und der zweite Rechner miteinander verbindbar. Zunächst wird eine elliptische Kurve und zumindest eine Koordinate mindestens eines ersten Punktes, der auf der elliptischen Kurve liegt, zwischen dem ersten Rechner und dem zweiten Rechner vereinbart. Der erste Rechner weist eine Prozessoreinheit auf, die derart eingerichtet ist, dass folgende Verfahrensschritte durchführbar sind: Der erste Punkt wird gemäß einem Montgomery-Leiter-Algorithmus mit einem Skalar multipliziert, wobei bei dem Algorithmus nur eine Koordinate des ersten Punktes verwendet wird. Als Ergebnis der Skalarmultiplikation werden weitere Punkte erhalten, welche zumindest eine Koordinate des jeweiligen Ergebnisses des mit dem Skalar multiplizierten ersten Punktes und des mit einem um einen Wert erhöhten Skalar multiplizierten ersten Punktes umfassen. Die ermittelten Punkte umfassen somit zumindest den ersten Punkt und die weiteren Punkte. Anschließend wird überprüft, ob die ermittelten Punkte auf einer Geraden liegen können. Die ermittelten Punkte werden als verifiziert erkannt, falls sie auf einer Geraden liegen können. Die ermittelten und verifizierten Punkte werden von dem ersten Rechner an den zweiten Rechner übermittelt, wobei für auf der elliptischen Kurve sich befindende Punkte jeweils nur die eine Koordinate des jeweiligen Punktes übertragen wird. Der zweite Rechner weist eine Prozessoreinheit auf, die derart eingerichtet ist, dass folgende Verfahrensschritte durchführbar sind: Die von dem ersten Rechner übermittelten Punkte werden empfangen und die empfangenen, ermittelten Punkte werden zusätzlich bearbeitet, wobei bei der gesamten zusätzlichen Bearbeitung nur die eine Koordinate des jeweiligen Punktes auf der elliptischen Kurve verwendet wird.

Die vorliegende Erfindung wird nachfolgend an Ausführungsbeispielen anhand der Zeichnung näher erläutert. Es zeigt

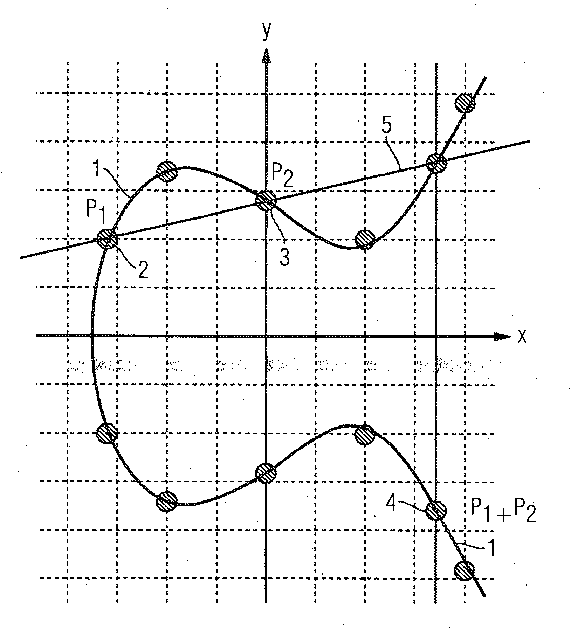

Figur 1   eine schematische Darstellung einer elliptischen Kurve über den reellen Zahlen.

Eine elliptische Kurve E wird allgemein durch eine kubische Gleichung der folgenden Form beschrieben

$$y^2 + a_1 * x * y + a_3 * y = x^3 + a_2 * x^2 + a_4 * x + a_6,$$

wobei $a_1$, $a_2$, $a_3$, $a_4$, $a_6$ fixe Elemente eines endlichen Körpers K sind, welche die elliptische Kurve E parametrisieren. In diesem Zusammenhang ist anzumerken, dass in Abhängigkeit von der Charakteristik des Körpers K die Kurvengleichung der elliptischen Kurve E auf einfachere Kurvengleichungen transformiert werden kann.

Wie weiter oben schon angedeutet, bildet die Skalarmultiplikation von Kurvenpunkten der elliptischen Kurve mit ganzen Zahlen die Grundlage aller kryptographischen Verfahren auf Basis elliptischer Kurven. Sei S eine ganze Zahl, P ein Punkt der elliptischen Kurve E und Q = n * P das n-fache des Punktes P. Sind die Punkte P und Q gegeben, so bezeichnet man die Berechnung eines geeigneten Skalar n mit Q = n * P als das diskrete Logarithmusproblem für elliptische Kurven. Bei geeigneter Wahl des endlichen Körpers K und der Parameter der elliptischen Kurve E ist es mit derzeitigen algorithmischen Mitteln nicht in akzeptabler Zeit möglich, das diskrete Logarithmusproblem zu lösen.

Ein Punkt P einer elliptischen Kurve E ist durch seine x-Koordinate und seine y-Koordinate gegeben. Aufgrund der Kurvengleichung der elliptischen Kurve E existieren zu einem x-Wert höchstens zwei unterschiedliche y-Werte $y_1$ und $y_2$, so dass die Punkte $(x,y_1)$ und $(x,y_2)$ Punkte auf der elliptischen Kurve E sind. Um somit einen Punkt auf der elliptischen Kurve

E eindeutig festzulegen, ist außer der x-Koordinate nur noch ein Bit an zusätzlicher Information erforderlich.

In dem Fall einer elliptischen Kurve E über endlichen Primkörpern genügt beispielsweise das sog. Least Significant Bit (LSB) der y-Koordinate oder das Vorzeichen der y-Koordinate des jeweiligen Punktes als zusätzliche Information.

Diese Eigenschaften von elliptischen Kurven macht man sich in dem sog. Montgomery-Leiter-Algorithmus zunutze, welcher eine gängige Methode zur Implementierung der Skalarmultiplikation auf elliptischen Kurven darstellt. Der Montgomery-Leiter Algorithmus lässt sich dergestalt implementieren, dass zur Berechnung der x-Koordinate eines skalaren Vielfachen eines Punktes P nur die x-Koordinate von P verwendet wird. Da die Montgomery-Leiter gleichzeitig eine sehr gute Methode ist, einfachen Stromanalysen entgegenzuwirken, wird sie häufig in Kryptosystemen, die auf Embedded Systemen laufen, implementiert.

Gemäß dem im Weiteren beschriebenen Verfahren eines Montgomery-Leiter-Algorithmus wird ein Vielfaches n * P eines Punktes P, der sich auf einer elliptischen Kurve befindet, berechnet.

Der Skalar n = (n1, ..., nl), gegeben in Binärdarstellung, wird bitweise, beginnend beim sogenannten Most Significant Bit (MSB, N1) abgearbeitet.

Bezeichne im Folgenden $u_i$ den Wert der Binärdarstellung $(n_1, ..., n_i)$ für alle i von 1 bis 1. Als Zwischenergebnisse werden in der jeweiligen i-ten Runde (i-ten Iteration) die Punkte $Q_i = u_i * P$ und $R_i = (u_i+1) * P$ berechnet gemäß folgender Vorschrift, welche in einem Pseudocode dargestellt ist:

```
Q₀ ← O;                    /* Initialisierung */
R₀ ← P;

for i ← 1 to ℓ do /* Hauptschleife */
    if nᵢ = 1 then
        Qᵢ ← Qᵢ₋₁ + Rᵢ₋₁;
        Rᵢ ← 2 · Rᵢ₋₁;
    else
        Rᵢ ← Rᵢ₋₁ + Qᵢ₋₁;
        Qᵢ ← 2 · Qᵢ₋₁;
    fi
od
return Qℓ;/* Ergebnis n · P */
```

Gemäß dem oben dargelegten ersten Teil-Verfahren wird zunächst einem Initialisierungspunkt $Q_0$ der Wert O zugeordnet, was einer Initialisierung dieser Variablen entspricht.

Einer zusätzlichen Variablen R wird in einem zusätzlichen I-nitialisierungsschritt als Initialisierungsvariable $R_0$ der Wert des Punktes P zugeordnet.

In einem zusätzlichen Schritt wird in der eigentlichen Berechnungsschleife in jeder Iteration für den jeweils berücksichtigten Skalarwert $n_i$ für den Fall, dass der Skalarwert $n_i$ den Wert 1 aufweist, dem Wert einer ersten Zwischenvariablen Q zu der Iteration i (bezeichnet als $Q_i$) die Summe des Wertes der ersten Zwischenvariable $Q_{i-1}$ zu der vorangegangen Iteration i-1 und dem Wert der zweiten Zwischenvariable $R_{i-1}$ zu der vorangegangen Iteration i-1 zugeordnet. Dem Wert der zweiten Zwischenvariable Ri in der Iteration i wird der zweifache Wert der zweiten Zwischenvariablen zu der vorangegangen Iteration i-1 zugeordnet.

Ist der Wert des Skalar $n_i$ nicht gleich 1, so wird der zweiten Zwischenvariablen $R_i$ in der Iteration i die Summe der Werte der Summe der ersten Zwischenvariablen $R_{i-1}$ in der vorangegangen Iteration i-1 und dem Wert der ersten Zwischenvariablen $Q_{i-1}$ in der vorangegangen Iteration i-1 zugeordnet. Der ersten Zwischenvariablen $Q_i$ zu der Iteration i wird der zweifache, das heißt der verdoppelte Wert der ersten Zwischenvariablen $Q_{i-1}$ zu der vorangegangenen Iteration i-1 zugeordnet.

Gemäß dem oben beschriebenen Pseudocode wird der sich ergebende Wert der Zwischenvariablen $Q_1$ in der letzten Iteration 1 als Ergebniswert dieser Operation ausgegeben, wenn alle Skalarwerte $n_i$ des Skalars n abgearbeitet sind. Wahlweise können die Zwischenvariablen $R_i$ und $Q_i$ nach jeder Iteration oder nach einer vorgebbaren Anzahl von Iterationsschritten als Zwischenergebniswert ausgegeben werden. Bei fehlerfreier Berechung der Ergebnisse in dem Montgomery-Leiter-Algorithmus liegen nach jedem Iterationsschritt die Zwischenvariablen in der Form

$$R_i = (u_i + 1) \cdot P \quad und \quad Q_i = u_i \cdot P$$

vor, welche sich in der Differenz nur um den Punkt P unterscheiden.

Demnach berechnet die Montgomery-Leiter gleichzeitig die x-Koordinaten der Punkte n * P sowie (n+1) * P. Da die y-Koordinate der Differenz der beiden Ergebnisse bekannt ist, kann am Ende der Schleife aus den berechneten x-Koordinaten der vollständige Punkt n * P rekonstruiert werden.

Ausgehend hiervon ist eine einfache Methode zur Absicherung einer Skalarmultiplikation auf elliptischen Kurven, am Ende der Berechnung zu testen, ob das Ergebnis noch einen Punkt auf der elliptischen Kurve darstellt. Dazu muss lediglich überprüft werden, ob die Koordinaten des Ergebnispunktes die Gleichung der elliptischen Kurve erfüllen.

In speziellen Umgebungen, auf denen kryptographische Verfahren implementiert werden sollen, wie beispielsweise Smart Cards oder RFID-Chips, sind jedoch spezielle Anforderungen hinsichtlich der verfügbaren Rechenkapazität und des vorhandenen Speicherplatzes zu berücksichtigen. In diesen Umgebungen hat das oben beschriebene Verfahren zur Verifizierung der ermittelten Punkte auf der elliptischen Kurve jedoch den Nachteil, dass eine vollständige Rekonstruktion des Ergebnispunktes und ein anschließendes Einsetzen in die elliptische Kurvengleichung erhebliche Anforderungen an die vorhandene Rechnerstruktur stellt und somit einen wesentlich erhöhten Rechenzeitbedarf zur Folge hat.

Ein weiteres Verfahren zum Verifizieren von ermittelten Punkten auf einer elliptischen Kurvengleichung ausgehend von dem Montgomery-Leiter-Algorithmus wäre, auf die y-Koordinaten zu verzichten, so dass man in diesem Fall gezwungen ist, nach Einsetzen der x-Koordinate die Lösbarkeit einer quadratischen Gleichung in y zu überprüfen. Auch dieses Verfahren hat den wesentlichen Nachteil, dass es in Systemen mit begrenzten Rechenressourcen nicht umsetzbar ist.

Im Folgenden wird das erfindungsgemäße Verfahren zur Verifizierung von auf einer elliptischen Kurve ermittelten Punkten in einem Ausführungsbeispiel näher beschrieben.

Nach dem Additionsgesetz der elliptischen Kurve folgt, dass bei fehlerfreier Berechnung der Ergebnisse die Punkte $u_i \cdot P$, $-(u_i+1) \cdot P$ und P auf einer Geraden liegen.

Dies ist exemplarisch in der Figur 1 zu sehen. Die Figur 1 zeigt eine elliptische Kurve 1, in der die Punkte 2 $P_1$ = P, 3 $P_2$ = n * P und 4 $P_1$+$P_2$ = (n+1) * P gekennzeichnet sind. Für diese Punkte gilt:

$$P_1 + P_2 = P + n*P = (n+1) * P.$$

Wie aus dem Additionsgesetz der elliptischen Kurve folgt und aus der Figur 1 ersichtlich wird, liegen die Punkte $P_1$, $P_2$ und $-(P_1+P_2)$ auf einer Geraden 5. Dieses Phänomen wird in dem erfindungsgemäßen Verfahren zu Verifizierung von auf einer elliptischen Kurve ermittelten Punkten genutzt. Dazu wird ein quadratisches Polynom. Ist dieses quadratische Polynom nun für die ermittelten Koordinaten der Punkte des Montgomery-Leiter-Algorithmus $P_1+P_2=R_i=(u_i+1) \cdot P$, $P_2=Q_i=u_i \cdot P$ und $P_1=P$ erfüllt, werden die ermittelten Punkte als verifiziert erkannt.

Bei einem Angriff durch fehlerhafte Ergebnisse der Skalarmultiplikation versucht ein Angreifer gezielt, einen Fehler innerhalb der Montgomery-Leiter zu induzieren. Bei einer Smart Card oder einem RFID-Chip erfolgt dies zum Beispiel durch Temperatur- oder Spannungsschwankungen, durch Aussetzen einer Strahlung usw. Wird der Fehler erst innerhalb der Berechnung der Montgomery-Leiter induziert, sind vor allen Dingen zwei Fälle zu unterscheiden:

Im ersten Fall verursacht der induzierte Fehler, dass das Ergebnis nach einem Durchlauf der Schleife innerhalb der Montgomery-Leiter kein gültiger Punkt der Kurve ist. Dies bedeutet, dass mindestens eines der beiden Ergebnisse $R_i$ und $Q_i$ keine x-Koordinate eines Punktes auf der elliptischen Kurve besitzen. In diesem Fall wird der Test mit dem quadratischen Polynom diesen Fehler offen legen.

Im zweiten Fall wird zwar ein Fehler erfolgreich induziert, die Ergebnisse bleiben jedoch weiterhin gültige x-Koordinaten von Punkten auf der elliptischen Kurve. In diesem Ausführungsbeispiel nehmen wir an, dass vor dem Fehler die Eingabe $u_i \cdot P$ und $(u_i+1) \cdot P$ ist. Nach dem nächsten Schleifendurchlauf erhält man unter der Annahme, dass der Fehler in die ersten Komponenten induziert wird, $n' \cdot P$ und $(2u_{i+1}+2) \cdot P$ beziehungsweise $n' \cdot P$ und $(2u_{i+1}+1) \cdot P$, je nach Wert des abgearbeiteten Bits. Es folgt, dass diese beiden Ergebnisse sich nicht mehr um P unterscheiden und daher die Punkte P, $n' \cdot P$ und $-(2u_{i+1}+2) \cdot P$ beziehungsweise $-(2u_{i+1}+1) \cdot P$ nicht mehr auf einer Geraden liegen können. Daher wird auch in diesem Fall das quadratische Polynom diesen Fehler aufdecken.

Dieses Verfahren zur effizienten Verifikation der Integrität eines Berechnungsergebnisses bildet einen wichtigen Baustein zur Formulierung von fehlerresistenten asymmetrischen Low-Cost- Kryptographieprotokollen, welche beispielsweise in Smart Cards, RFID-Chips oder embedded Systemen eingesetzt werden. Nach dem üblicherweise in diesen Protokollen auf y-Koordinaten verzichtet wird, ist ein Test einer x-Koordinate, ob sie eine Komponente eines gültigen Punktes ist, nur mit der Lösung einer quadratischen Gleichung möglich. Dieser Test umfasst einige rechenaufwändige Operationen, so dass er für ein Low-Cost-Protokoll nicht in Frage kommt. Die Auswertung des quadratischen Polynoms kann wie im Folgenden gezeigt mit geringem Rechenaufwand erfolgen, so dass dieses Verfahren besonders geeignet ist, um Anwendung in einer Low-Cost- Anwendung zu finden.

Im Folgenden werden beispielhaft quadratische Polynome angegeben, die zur einfachen Verifizierung des Ergebnisses einer Skalarmultiplikation mittels der Montgomery-Leiter verwendet werden können. Dabei wird die Charakteristik des Körpers unterschieden, über den die elliptische Kurve definiert ist.

Bei einer Charakteristik des Körpers K=2 ist die elliptische Kurve durch die Gleichung

$$y^2 + xy = x^3 + a_2 x^2 + a_6$$

gegeben. Die Werte $x_1$, $x_2$, $x_3$ können genau dann x-Koordinaten von Punkten sein, die auf einer Geraden liegen, wenn das Polynom

$$p(x_1, x_2, x_3) = x_3^2 \cdot (x_1+x_2)^2 + x_1\, x_2\, x_3 + x_1^2\, x_2^2 + a_6$$

den Wert 0 annimmt. In projektiver Koordinatendarstellung gilt $x_1 = X_1/Z_1$, $x_2 = X_2/Z_2$, $x_3 = X_3/Z_3$ und der unendlich ferne Punkt besitzt die Darstellung $X \neq 0$ und $Z = 0$. Somit ergibt sich in der projektiven Darstellung das folgende Polynom zur Verifikation:

$$P(X_1, X_2, X_3, Z_1, Z_2, Z_3) = X_3^2 (X_1 Z_2 + X_2 Z_1)^2 + X_1 X_2 X_3 Z_1 Z_2 Z_3 + X_1^2 X_2^2 Z_3^2 + a_6 Z_1^2 Z_2^2 Z_3^2$$

Hat der Körper K die Charakteristik 3 ist die elliptische Kurve durch die Gleichung

$$y^2 = x^3 + a_2 x^2 + a_6$$

gegeben. Die Werte x1, x2, x3 können genau dann x-Koordinaten von Punkten sein, die auf einer Geraden liegen, wenn das Polynom

$$p(x_1, x_2, x_3) = x_3^2 (x_1-x_2)^2 + x_3 (x_1 x_2 (x_1+x_2-a_2) - a_6) + x_1^2 x_2^2 - a_6(x_1+x_2+a_2)$$

den Wert 0 annimmt.

In der projektiven Koordinatendarstellung ergibt sich das folgende Polynom zur Verifikation:

$$p(X_1,X_2,X_3,Z_1,Z_2,Z_3) = X_3^2(X_1Z_2-X_2Z_1)^2 + X_3Z_3(X_1X_2(X_1Z_2+X_2Z_1-a_2Z_1Z_2)-a_6Z_1^2Z_2^2) + Z_3^2(X_1^2X_2^2-a_6Z_1Z_2(X_1Z_2+X_2Z_1+a_2Z_1Z_2))$$

Bei einer Charakteristik des Körpers K > 3 ist die elliptische Kurve durch die Gleichung

$$y^2 = x^3 + a_4x + a_6$$

gegeben. Die Werte $x_1$, $x_2$, $x_3$ können genau dann x-koordinaten von Punkten sein, die auf einer Geraden liegen, wenn das Polynom

$$p(x_1,x_2,x_3) = x_3^2(x_1-x_2)^2 - 2x_3(2a_6+(a_4+x_1x_2)(x_1+x_2)) + (x_1x_2-a_4)^2 - 4a_6(x_1+x_2)$$

den Wert 0 annimmt.

In projektiver Koordinatendarstellung ergibt sich folgendes Polynom zur Verifikation:

$$p(X_1,X_2,X_3,Z_1,Z_2,Z_3) =$$

$$X_3^2(X_1Z_2-X_2Z_1)^2 - 2X_3Z_3(2a_6Z_1^2Z_2^2+(a_4Z_1Z_2+X_1X_2)(X_1Z_2+X_2Z_1)) + Z_3^2(X_1X_2-a_4Z_1Z_2)^2 - 4a_6Z_1Z_2Z_3^2(X_1Z_2+X_2Z_1)$$

Für alternative projektive Darstellungen, beispielsweise jacobische Koordinaten, müssen die Darstellungen entsprechend angepasst werden. Es zeigt sich jedoch schon hier, dass gemäß der vorliegenden Erfindung die Verifizierung von auf einer elliptischen Kurve ermittelten Punkten über eine Anzahl von Multiplikationen und Additionen vorgenommen werden kann und somit im Vergleich zu bisher bekannten Lösungen eine erhebliche Rechenaufwandsreduktion zu verzeichnen ist.

Die vorliegende Erfindung ist nicht auf die hier beschriebenen Ausführungsbeispiele beschränkt.

**Patentansprüche**

1. Kryptographisches Verfahren zum Verifizieren von auf einer elliptischen Kurve ermittelten Punkten, welches auf einer Hardwareplattform ausgeführt wird,
   wobei

   - eine elliptische Kurve bereitgestellt wird,
   - zumindest eine Koordinate von mindestens einem ersten Punkt, der auf der elliptischen Kurve liegt, ausgewählt oder ermittelt wird,
   - der erste Punkt gemäß einem Montgomery-Leiter-Algorithmus mit einem Skalar multipliziert wird, wobei bei dem Algorithmus nur eine Koordinate des ersten Punktes verwendet wird,

**dadurch gekennzeichnet, dass**

- als Ergebnis der Skalarmultiplikation weitere Punkte erhalten werden, welche zumindest eine Koordinate des jeweiligen Ergebnisses des mit dem Skalar multiplizierten ersten Punktes und des mit einem um einen Wert erhöhten Skalar multiplizierten ersten Punktes umfassen,
- die ermittelten Punkte zumindest den ersten Punkt und die weiteren Punkte umfassen,
- überprüft wird, ob die ermittelten Punkte auf einer Geraden liegen können,
- die ermittelten Punkte als verifiziert erkannt werden, falls sie auf einer Geraden liegen können.

2. Verfahren nach Anspruch 1, wobei jeweils eine Koordinate der ermittelten Punkte gespeichert wird.

3. Verfahren nach Anspruch 1, wobei als die eine Koordinate der ermittelten Punkte die x-Koordinate verwendet wird.

4. Verfahren nach Anspruch 1, wobei ein Polynom zur Überprüfung der ermittelten Punkte ausgewertet wird, wobei die Auswertung des Polynoms genau dann einen bestimmten Wert ergibt, wenn die zu überprüfenden Punkte auf einer Geraden liegen.

5. Verfahren nach Anspruch 4, wobei das Polynom zur Überprüfung der ermittelten Punkte die Koordinaten in projektiver und/oder affiner Koordinatendarstellung auswertet.

6. Verfahren nach Anspruch 1, wobei

- der Skalar in binärer Darstellung vorliegt,
- der Skalar beginnend beim so genannten Most Significant Bit (MSB) bitweise abgearbeitet wird.

7. Verfahren nach Anspruch 6, wobei nach einer vorgebbaren Anzahl von abgearbeiteten Bits des Skalars eine Verifizierung der ermittelten Punkte vorgenommen wird.

8. Vorrichtung zum Verifizieren von auf einer elliptischen Kurve ermittelten Punkten insbesondere nach einem Verfahren nach einem der Ansprüche 1 bis 7, bei dem die Vorrichtung Mittel aufweist, die derart eingerichtet sind, dass folgende Verfahrensschritte durchführbar sind:

- eine elliptische Kurve wird bereitgestellt,
- zumindest eine Koordinate von mindestens einem ersten Punkt, der auf der elliptischen Kurve liegt, wird ausgewählt oder ermittelt,
- der erste Punkt gemäß einem Montgomery-Leiter-Algorithmus mit einem Skalar multipliziert wird, wobei bei dem Algorithmus nur eine Koordinate des ersten Punktes verwendet wird,
**dadurch gekennzeichnet, dass**
- als Ergebnis der Skalarmultiplikation weitere Punkte erhalten werden, welche zumindest eine Koordinate des jeweiligen Ergebnisses des mit dem Skalar multiplizierten ersten Punktes und des mit einem um einen Wert erhöhten Skalar multiplizierten ersten Punktes umfassen,
- die ermittelten Punkte zumindest den ersten Punkt und die weiteren Punkte umfassen,
- überprüft wird, ob die ermittelten Punkte auf einer Geraden liegen können,
- die ermittelten Punkte als verifiziert erkannt werden, falls sie auf einer Geraden liegen können.

9. System zum Verifizieren von auf einer elliptischen Kurve ermittelten Punkten insbesondere nach einem Verfahren nach einem der Ansprüche 1 bis 7 mit einem ersten Rechner und einem zweiten Rechner, wobei der erste Rechner und der zweite Rechner miteinander verbindbar sind,

- bei dem eine elliptische Kurve und zumindest eine Koordinate eines ersten Punktes, der auf der elliptischen Kurve liegt, zwischen dem ersten Rechner und dem zweiten Rechner vereinbart wird,
- bei dem der erste Rechner eine Vorrichtung nach Anspruch 8 ist,
- und bei dem die ermittelten und verifizierten Punkte von dem ersten Rechner an den zweiten Rechner übermittelt werden, wobei für auf der elliptischen Kurve sich befindende Punkte jeweils nur die eine Koordinate des jeweiligen Punktes übertragen wird,
- bei dem der zweite Rechner eine Prozessoreinheit aufweist, die derart eingerichtet ist, dass folgende Verfahrensschritte durchführbar sind:
- die von dem ersten Rechner übermittelten Punkte werden empfangen,

- die empfangenen, ermittelten Punkte werden zusätzlich bearbeitet, wobei bei der gesamten zusätzlichen Bearbeitung nur die eine Koordinate des jeweiligen Punktes auf der elliptischen Kurve verwendet wird.

**Claims**

1. Cryptographic method for verifying points determined on an elliptic curve, which is carried out on a hardware platform, wherein

    - an elliptic curve is provided,
    - at least one coordinate of at least one first point lying on the elliptic curve is selected or determined,
    - the first point is multiplied by a scalar according to a Montgomery ladder algorithm, with just one coordinate of the first point being used in the algorithm,
    **characterised in that**
    - further points are obtained as a result of the scalar multiplication, said points comprising at least one coordinate of the respective result of the first point multiplied by the scalar and of the first point multiplied by a scalar increased by a value,
    - the determined points comprise at least the first point and the additional points,
    - the determined points are verified to establish whether they can lie on a straight line,
    - the determined points are identified as verified if they can lie on a straight line.

2. Method according to claim 1, wherein one coordinate of each determined point is saved.

3. Method according to claim 1, wherein the x-coordinate is used as the one coordinate of the determined points.

4. Method according to claim 1, wherein
   a polynomial for verifying the determined points is evaluated, with the evaluation of the polynomial producing one specific value precisely when the points to be verified lie on a straight line.

5. Method according to claim 4, wherein the polynomial for verifying the determined points evaluates the coordinates in the projective and/or affine coordinate representation.

6. Method according to claim 1, wherein

    - the scalar exists in binary form,
    - the scalar is processed bit by bit starting with the most significant bit (MSB).

7. Method according to claim 6, wherein the determined points are verified after a definable number of processed bits of the scalar.

8. Device for verifying points determined on an elliptic curve in particular according to a method according to one of claims 1 to 7, in which the device comprises means that are configured such that the following method steps can be performed:

    - an elliptic curve is provided,
    - at least one coordinate of at least one first point lying on the elliptic curve is selected or determined,
    - the first point is multiplied by a scalar according to a Montgomery ladder algorithm, with just one coordinate of the first point being used in the algorithm,
    **characterised in that**
    - further points are obtained as a result of the scalar multiplication, said points comprising at least one coordinate of the respective result of the first point multiplied by the scalar and of the first point multiplied by a scalar increased by a value,
    - the determined points comprise at least the first point and the additional points,
    - the determined points are verified to establish whether they can lie on a straight line,
    - the determined points are identified as verified if they can lie on a straight line.

9. System for verifying points determined on an elliptic curve in particular according to a method according to one of claims 1 to 7, said system comprising a first processor and a second processor, it being possible to connect together the first processor and the second processor,

- in which an elliptic curve and at least one coordinate of a first point lying on the elliptic curve are agreed between the first processor and the second processor,
- in which the first processor is a device according to claim 8,
- and in which the determined and verified points are transmitted from the first processor to the second processor, with just the one coordinate of the respective point being transmitted for each of the points located on the elliptic curve,
- in which the second processor is a processor unit, which is set up so that the following method steps can be implemented:
- the points transmitted by the first processor are received,
- the received, determined points undergo additional processing, with just the one coordinate of the respective point on the elliptic curve being used in the entire additional processing.

**Revendications**

1. Procédé cryptographique de vérification de points déterminés sur une courbe elliptique, lequel est réalisé sur une plateforme hardware,

- une courbe elliptique étant mise à disposition,
- au moins une coordonnée d'au moins un premier point situé sur la courbe elliptique étant sélectionnée ou déterminée,
- le premier point étant multiplié par un scalaire selon un algorithme de l'échelle de Montgoméry, l'algorithme n'utilisant qu'une coordonnée du premier point,
**caractérisé en ce que**
- sont obtenus, en tant que produit de la multiplication scalaire, d'autres points qui incluent au moins une coordonnée du produit respectif de la multiplication du premier point par le scalaire et de la multiplication du premier point par un scalaire majoré d'une valeur ;
- les points déterminés incluent au moins le premier point et les autres points ;
- il est controlé si les points déterminés peuvent se trouver sur une droite ;
- les points déterminés sont reconnus comme vérifiés s'ils peuvent se trouver sur une droite.

2. Procédé selon la revendication 1, respectivement une coordonnée des points déterminés étant mise en mémoire.

3. Procédé selon la revendication 1, la coordonnée x étant utilisée en tant que l'une coordonnée des points déterminés.

4. Procédé selon la revendication 1, un polynôme de contrôle des points déterminés étant évalué, l'évaluation du polynôme donnant une valeur déterminée exactement lorsque les points à contrôler se trouvent sur une droite.

5. Procédé selon la revendication 4, le polynôme de contrôle des points déterminés évaluant les coordonnées dans une représentation projective et/ou affine des coordonnées.

6. Procédé selon la revendication 1,

- le scalaire étant en représentation binaire,
- le scalaire étant traité bit par bit en commençant par ce qu'il est convenu d'appeler le bit le plus significatif (MSB).

7. Procédé selon la revendication 6, une vérification des points déterminés étant effectuée après un nombre prédéterminable de bits traités du scalaire.

8. Dispositif de vérification de points déterminés sur une courbe elliptique en particulier selon un procédé selon l'une des revendications 1 à 7, dans lequel le dispositif comporte des moyens qui sont aménagés de manière telle que les étapes de procédé suivantes peuvent être exécutées :

- une courbe elliptique est mise à disposition,
- au moins une coordonnée d'au moins un premier point situé sur la courbe elliptique est sélectionnée ou déterminée,

- le premier point est multiplié par un scalaire selon un algorithme de l'échelle de Montgoméry, l'algorithme n'utilisant qu'une coordonnée du premier point,

**caractérisé en ce que**

- sont obtenus, en tant que produit de la multiplication par un scalaire, d'autres points qui incluent au moins une coordonnée du produit respectif de la multiplication du premier point par le scalaire et de la multiplication du premier point par un scalaire majoré d'une valeur ;
- les points déterminés incluent au moins le premier point et les autres points ;
- il est contrôlé si les points déterminés peuvent se trouver sur une droite ;
- les points déterminés sont reconnus comme vérifiés s'ils peuvent se trouver sur une droite.

9. Système de vérification de points déterminés sur une courbe elliptique, en particulier selon un procédé selon l'une des revendications 1 à 7, avec un premier ordinateur et un deuxième ordinateur, le premier ordinateur et le deuxième ordinateur pouvant être reliés entre eux, dans lequel

- il est convenu, entre le premier ordinateur et le deuxième ordinateur, d'une courbe elliptique et d'au moins une coordonnée d'un premier point qui se trouve sur la courbe elliptique ;
- le premier ordinateur est un dispositif selon la revendication 8 et
- les points déterminés et vérifiés sont transmis du premier ordinateur au deuxième ordinateur tout en étant que, pour des points qui se trouvent sur la courbe elliptique, seule l'une coordonnée du point respectif est respectivement transmise ;
- le deuxième ordinateur comporte une unité de processeur qui est aménagée de manière telle que les étapes de procédé suivantes peuvent être exécutées :
- les points transmis par le premier ordinateur sont reçus ;
- les points déterminés reçus subissent un traitement additionnel, seule l'une coordonnée du point respectif sur la courbe elliptique étant utilisée pour la totalité du traitement additionnel.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1443393 A2